# EUROPEAN PATENT APPLICATION

(11) **EP 4 814 658 A1**
(43) Date of publication of application: **30.09.2026**
(21) Application number: 26167141.6
(22) Date of filing: 24.03.2026
(51) Int. Cl.: G06F 1/3203, G06F 3/041, G02F 1/1333

(54) **TOUCH DRIVING DEVICE AND TOUCH DRIVING METHOD THEREOF**

(30) Priority: 27.03.2025 KR 20250039449
(71) Applicant: LX Semicon Co., Ltd., Daejeon 34027 (KR)
(72) Inventor: JUNG, Yeon Jae, 34027 Daejeon (KR)
(74) Representative: Goddar, Heinz J.

(57) **Abstract**

A touch driving device, a display device, and a touch driving method thereof are disclosed. The touch driving device includes: a sensing circuit including a plurality of multiplexers connected to a plurality of sensing lines; and a touch controller configured to operate in an active mode and an idle mode, calculate touch sensing coordinates by receiving output signals of the multiplexers in the active mode, and detect a valid touch signal in the idle mode. The touch controller is configured to output a first control signal for receiving the output signals of the multiplexers one time within a first set time in the idle mode to the multiplexers, and output a second control signal for repeatedly receiving output signals of the multiplexers at a second set time interval in a self-generation interval of the idle mode after the first set time to the multiplexers.

## Description

### CROSS-REFERENCE TO RELATED APPLICATION

This application claims priority to and the benefit of Korean Patent Application No. 10-2025-0039449, filed March 27, 2025, the disclosure of which is incorporated herein by reference in its entirety.

### BACKGROUND

### Field

The present embodiment relates to a touch driving device with improved touch report rate performance, a display device including the same, and a touch driving method thereof.

### Discussion of Related Art

In touch sensing systems, an in-cell driving method operates by time-dividing a display period and a touch sensing period using a touch synchronization signal per one vertical synchronization signal. The in-cell driving method performs sensing one time according to the cycle of the vertical synchronization signal or the touch synchronization signal transmitted from a timing controller, calculates coordinates based on sensing data, and transmits the calculated coordinates to a host. Touch report rate or latency performance is proportional to a screen display refresh rate.

However, there is a problem in that not only is the performance of the touch report rate that may be transmitted to the host significantly degraded, but also the latency performance is significantly degraded in the case of a touch before and after sensing.

### SUMMARY

The present embodiment provides a touch driving device, a display device, and a touch driving method thereof capable of improving touch report rate performance by generating a sensing signal regardless of a **refresh** rate of a screen.

The present embodiment provides a touch driving device, a display device, and a touch driving method thereof capable of not only improving touch latency performance to improve a phenomenon in which a first touch is not recognized, but also improving double click performance.

The present embodiment provides a touch driving device, a display device, and a touch driving method thereof capable of enabling double clicking upon a first touch and curve drawing and straight drawing in an area where a touch is first made in an interval in which an idle mode is switched to an active mode.

Problems to be solved by the present disclosure are not limited to the problems mentioned above, and other problems not mentioned herein will be clearly understood by those skilled in the art from the following description.

A touch driving device according to an embodiment of the present disclosure includes: a sensing circuit including a plurality of multiplexers connected to a plurality of sensing lines; and a touch controller configured to operate in an active mode and an idle mode, calculate touch sensing coordinates by receiving output signals of the multiplexers in the active mode, and detect a valid touch signal in the idle mode. The touch controller is configured to output a first control signal for receiving the output signals of the multiplexers one time within a first set time in the idle mode to the multiplexers, and output a second control signal for repeatedly receiving the output signals of the multiplexers at a second set time interval in a self-generation interval of the idle mode after the first set time to the multiplexers.

A touch driving method according to an embodiment of the present disclosure includes: calculating, by a touch controller, touch sensing coordinates by receiving output signals of a plurality of multiplexers included in a sensing circuit in an active mode; detecting, by the touch controller, a valid touch signal in an idle mode; outputting, by the touch controller, a first control signal for receiving the output signals of the multiplexers one time within a first set time in the idle mode to the multiplexers; and outputting, by the touch controller, a second control signal for repeatedly receiving the output signals of the multiplexers at a second set time interval in a self-generation interval of the idle mode after the first set time to the multiplexers.

According to the present embodiment, touch report rate performance may be improved by generating a sensing signal regardless of a refresh rate of a screen.

According to the present embodiment, touch latency performance may be enhanced to not only improve a phenomenon in which a first touch is not recognized, but also improve double click performance.

According to the present embodiment, double clicking upon a first touch and curve drawing and straight drawing in an area where a touch is first made can be enabled in an interval in which an idle mode is switched to an active mode.

Effects of the present disclosure are not limited to the effects mentioned above, and other effects not mentioned herein will be clearly understood by those skilled in the art from the following description.
The touch driving device or the display device may comprise any one, some or all of the features disclosed herein with respect to the touch driving method. The touch driving method may comprise any one, some or all of the features disclosed herein with respect to the touch driving device or the display device.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a configuration diagram of a display device according to an embodiment of the present disclosure;
FIG. 2 is a block diagram of a touch driving device according to an embodiment of the present disclosure;
FIG. 3 is a schematic view for explaining the operation of the multiplexers connected to a display panel via sensing lines according to an embodiment of the present disclosure;
FIG. 4 is a signal waveform diagram comparing the operations before and after sensing a touch interrupt signal in an idle mode according to an embodiment of the present disclosure;
FIG. 5 is a schematic view illustrating a frame structure in an active mode according to an embodiment of the present disclosure;
FIG. 6 is a signal waveform diagram illustrating the operation in the active mode according to an embodiment of the present disclosure;
FIG. 7 is a schematic view illustrating a frame structure in the idle mode according to an embodiment of the present disclosure;
FIG. 8 is a first signal waveform diagram illustrating the operation in the idle mode according to an embodiment of the present disclosure;
FIG. 9 is a second signal waveform diagram illustrating the operation in the idle mode according to an embodiment of the present disclosure;
FIG. 10 is a flowchart illustrating a touch driving method in the active mode according to an embodiment of the present disclosure;
FIG. 11 is a flowchart illustrating an interval prior to a self-generation interval of the idle mode in a touch driving method according to an embodiment of the present disclosure; and
FIG. 12 is a flowchart illustrating the self-generation interval of the idle mode according to an embodiment of the present disclosure.

### DETAILED DESCRIPTION OF EXEMPLARY EMBODIMENTS

The advantages and features of the present disclosure, and methods of achieving them will be apparent from the embodiments described in detail below in conjunction with the accompanying drawings. However, the present disclosure is not limited to the following embodiments, but may be implemented in various different forms; rather, the present embodiments are provided to make the description of the present disclosure complete and to allow those skilled in the art to fully understand the scope of the present disclosure, and the present disclosure is defined only within the scope of the appended claims.

The shapes, sizes, proportions, angles, numbers and the like shown in the accompanying drawings for the purpose of illustrating the embodiments of the present disclosure are merely examples, and the present disclosure is not limited thereto. Identical reference numerals may designate identical components throughout the description. Further, in describing the present disclosure, detailed descriptions of known related technologies may be omitted if it is considered to unnecessarily obscure the gist of the present disclosure. The terms such as "including," "having," and "consisting of" used herein are generally intended to allow other components to be added unless the terms are used with the term "only." References to components of a singular noun include the plural of that noun, unless specifically stated otherwise.

In the interpretation of components, they are construed to include margins of error, even if not explicitly stated.

When describing a positional relationship, for example, "on," "above," "below," or "next to" describes the positional relationship of two parts, one or more other parts may be located between the two parts, unless "immediately" or "directly" is used.

When describing a temporal contextual relationship is described, for example, such as "after," "following," "next to," or "before," it may also include non-contiguous cases unless "immediately" or "directly" is used.

As used herein, the term "part" may refer to a unit that processes at least one function or operation, such as a software or hardware component. The functions provided by the "part" may be performed separately by multiple components, or it may be integrated with other additional components. In this specification, the "part" may be implemented in a single circuit or in a plurality of circuits, or in a single device or in a plurality of devices.

Each of the features of various embodiments described herein may be coupled or combined with one another in whole or in part, and may be technologically interlocked and operated in various ways, and each of the embodiments may be carried out independently or in conjunction with one another.

The display device of the present embodiment may be implemented as a flat panel display device such as a liquid crystal display (LCD) device, an organic light-emitting diode display (OLED) device, and the like. In the following embodiments, a liquid crystal display device is described as an example of a flat panel display device, but the present disclosure is not limited thereto. For example, the display device of the present disclosure may be any display device to which in-cell touch sensor technology can be applied.

The touch sensor of the present embodiment may be implemented as a capacitive type touch sensor that can be embedded in a pixel array, for example, a mutual capacitance sensor or a self-capacitance sensor. Below, the touch sensor is described with a focus on a magnetic capacitance sensor, but this embodiment is not limited thereto.

The operation mode of the touch driving device may be divided into an active mode that detects a touch position of an object (stylus or finger) on a display panel and senses information transmitted by the object, and an idle mode that controls output of a pulse signal by setting a predetermined time period in a state in which no touch input is present. The idle mode includes a self-generation interval in which the pulse signal is output at regular time intervals.

In this case, the operation mode distinguished according to the touch sensing type may be expressed in various terms other than the active mode and the idle mode.

Hereinafter, various embodiments of the present disclosure will be described in detail with reference to the accompanying drawings.

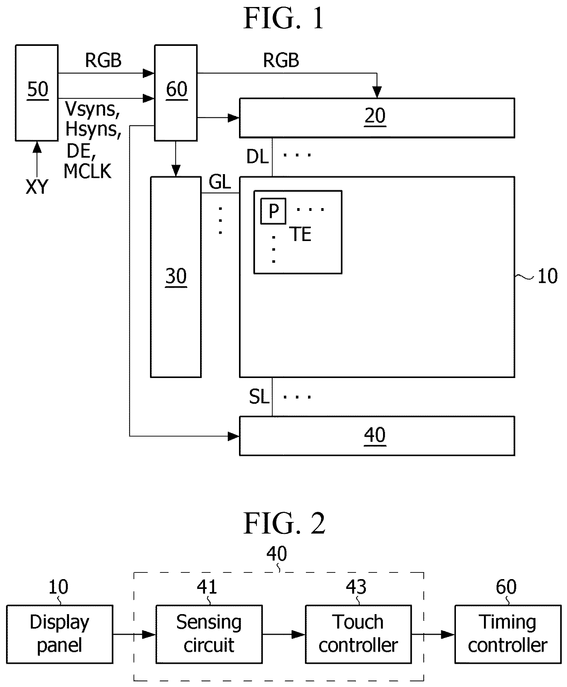

FIG. 1 is a configuration diagram of a display device according to an embodiment of the present disclosure.

Referring to FIG. 1, the display device includes a display panel 10, a data driving device 20, a gate driving device 30, a touch driving device 40, a host system 50, and a timing controller 60.

A plurality of data lines DL connected to the data driving device 20 and a plurality of gate lines GL connected to the gate driving device 30 may be formed on the display panel 10.

A plurality of pixels P corresponding to intersection points of the plurality of data lines DL and the plurality of gate lines GL may be defined on the display panel 10.

In each pixel P, a transistor may be formed in which a first electrode (e.g., a source electrode or a drain electrode) is connected to the data line DL, a gate electrode is connected to the gate line GL, and a second electrode (e.g., a drain electrode or a source electrode) is connected to a cathode electrode.

In the display panel 10, a plurality of touch electrodes TE may be further formed to be spaced apart from each other. A single pixel P or a plurality of pixels P may be positioned in an area where the touch electrode TE is positioned.

The display panel 10 may include a display panel and a touch panel (TSP). Here, the display panel and the touch panel may share some components with each other. For example, the plurality of touch electrodes TE may be a component of the display panel (e.g., a common electrode for applying a common voltage) and, at the same time, may be a component of the touch panel (a touch electrode for sensing a touch).

In view of the fact that some components of the display panel and the touch panel are shared with each other, such a display panel 10 may be defined as an integrated display panel. In addition, an in-cell type panel is known as a form in which some components of the display panel and the touch panel are shared with each other, but this is only an example of the above-described display panel 10, and the display panel 10 to which the present embodiment is applied is not limited to such an in-cell type panel.

The host system 50 may transmit digital video data RGB of an input image along with timing signals Vsync, Hsync, DE, and MCLK to the timing controller 60.

The host system 50 may execute an application program associated with coordinate information (XY) of a touch input from the touch driving device 40.

The timing controller 60 may control the operation timings of the data driving device 20, the gate driving device 30, and the touch driving device 40 by using timing signals such as a vertical synchronization signal Vsync, a horizontal synchronization signal Hsync, a data enable signal DE, and a main clock MCLK received from the host system 50 in synchronization with the data RGB of the input image. The timing controller 60 may generate a touch enable signal for defining a display period and a touch sensor driving period by using the input timing signals.

The display device according to the embodiment may employ a capacitive touch method configured to recognize the proximity or touch of an object by sensing a change in capacitance through the touch electrode TE.

The display device may drive the touch electrodes TE by dividing them into a display period and a touch sensing period. As an example, the touch driving device 40 of the display device may not apply a driving signal to all or some of the touch electrodes TE during an interval in which a data signal is supplied. However, the present embodiments are not limited thereto. For example, the display device may drive the touch electrodes TE without dividing the display period and the touch sensing period. The touch driving device 40 of the display device may apply a driving signal to all or some of the touch electrodes TE in the interval in which the data signal is supplied.

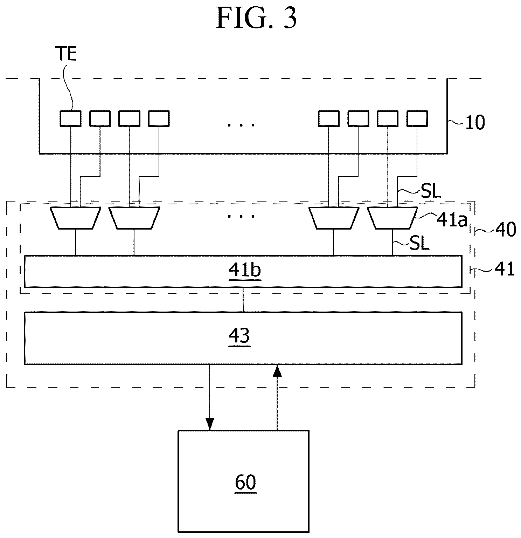

FIG. 2 is a block diagram of a touch driving device according to an embodiment of the present disclosure, and FIG. 3 is a schematic view for explaining the operation of the multiplexers connected to a display panel via sensing lines according to an embodiment of the present disclosure.

Referring to FIGS. 2 and 3, the touch driving device may include a sensing circuit 41 and a touch controller 43.

The sensing circuit 41 may include a plurality of multiplexers 41a connected to a plurality of sensing lines SL. The multiplexers 41a are connected to the touch electrodes TE in the display panel 10 and a switch array 41b through the sensing lines SL. The output signals of the multiplexers 41a are transmitted to the touch controller 43 by individual switches of the switch array 41b through the sensing lines SL.

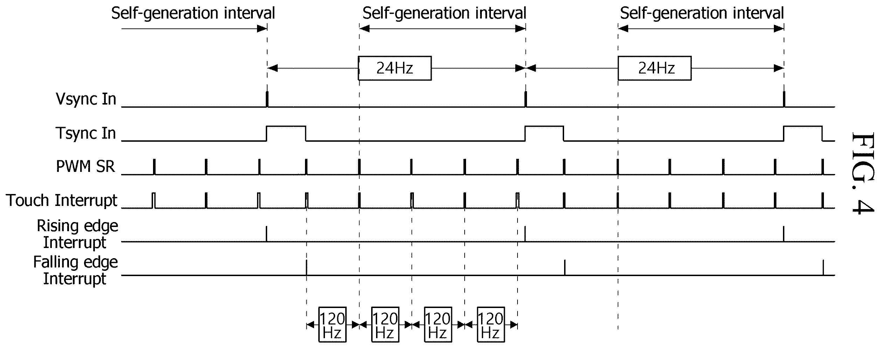

The touch controller 43 may operate according to an active mode or an idle mode. The touch controller 43 may receive output signals of the plurality of multiplexers 41a by controlling the switch array 41b according to the active mode or the idle mode. For example, in the active mode, the switch array 41b may be controlled to sequentially receive the output signals of three multiplexers 41a for each touch sensing period. In the active mode, the touch controller 43 receives the output signals of the multiplexers 41a, calculates touch sensing coordinates, and transmits a touch report to the timing controller 60. In the idle mode, the switch array 41b may be controlled to short-circuit five multiplexers 41a to receive the output signals one time. In particular, in a self-generation interval (see FIG. 4) of the idle mode, the switch array 41b may be controlled to repeatedly receive the output signals of the plurality of multiplexers 41a. The self-generation interval refers to an interval in which a second pulse signal repeatedly appears.

The touch controller 43 may determine whether there is a valid touch input on the display panel 10 in an active mode for sensing information transmitted by an object. Here, the object may be a stylus or a finger.

If there is a valid touch input in the active mode, the touch controller 43 may initialize the count of active mode frames to zero (0).

The touch controller 43 may increase a count of active mode frames if there is no valid touch input on the display panel 10 in the active mode.

In the active mode, the touch controller 43 determines whether the count of active mode frames is greater than a preset value. The touch controller 43 may operate in the idle mode when the count of active mode frames is greater than the preset value. Here, the preset value may be 3,600, but is not limited thereto. The touch controller 43 may initialize the count of active mode frames to zero (0) before operating in the idle mode.

In the idle mode, the touch controller 43 receives a touch synchronization signal from the timing controller 60. When a falling edge of the touch synchronization signal occurs, the touch controller 43 may generate a falling edge interrupt signal (identical to the falling edge signal of "Tsync In" in FIG. 4). The occurrence of the falling edge interrupt signal signifies the start of the idle mode. Here, the falling edge of the touch synchronization signal refers to a signal at the moment when it changes from 1 to 0.

In the idle mode for detecting a valid touch signal, the touch controller 43 deactivates a timer function and then sets a first set time. The deactivation of the timer function means that the time counting operation is not performed, as opposed to activation. The first set time refers to the duration from when the falling edge of the touch synchronization signal occurs until the touch controller 43 operates in a self-generation interval.

The touch controller 43 outputs a first control signal to the multiplexers 41a to receive the output signals of the multiplexers one time within the first set time, and may determine whether the first set time has elapsed.

In the idle mode, the touch controller 43 receives the touch synchronization signal from the timing controller 60 before the first set time elapses. When a rising edge of the touch synchronization signal occurs, the touch controller 43 generates a rising edge interrupt signal (identical to the rising edge signal of Tsync In in FIG. 4) so as not to operate in the self-generation interval.

When the first set time has elapsed, the touch controller 43 may be deactivated in the self-generation interval and then control the sensing circuit unit 41 to output a second pulse signal.

In the self-generation interval, the touch controller 43 may deactivate the timer function, set a second set time, and determine whether the second set time has elapsed. The second set time refers to the duration from when the second pulse signal is generated until the second pulse signal is generated again.

Upon elapse of the second set time, the touch controller 43 controls the sensing circuit unit 41 to output the second pulse signal and then repeatedly performs the setting of the second set time. That is, after the first set time, the touch controller 43 outputs a second control signal to the multiplexers 41a to repeatedly receive the output signals of the multiplexers at every second set time interval in the self-generation interval of the idle mode. According to an embodiment, the first set time and the second set time may be the same. However, the present embodiments are not limited thereto. For example, the first set time and the second set time may be different.

The touch controller 43 may receive a touch synchronization signal from the timing controller 60 before elapse of the second set time in the self-generation interval. When a rising edge of the touch synchronization signal occurs, the touch controller 43 generates a rising edge interrupt signal and operates outside the self-generation interval. The occurrence of the rising edge interrupt signal signifies the end of the touch sensing period. Here, the rising edge of the touch synchronization signal refers to a signal at the moment when it changes from 0 to 1.

The touch controller 43 may operate in the active mode if a valid touch signal is detected in the self-generation interval.

Instances where the timing controller 60 generates a mode control signal include: (i) when the touch controller 43 transmits a mode change signal to the idle mode to the timing controller 60 in the active mode; and (ii) when the touch controller 43 transmits a change signal to the idle mode to the timing controller 60 after receiving the touch synchronization signal from the timing controller 60.

According to the description above, while the sensing circuit unit 41 is controlled to output a pulse signal every one time according to the cycle of the touch synchronization signal (or vertical synchronization signal) transmitted from the timing controller 60, in an embodiment of the present disclosure, the touch report rate and latency performance may be improved by controlling the sensing circuit unit 41 to repeatedly output the pulse signal at desired time intervals in the self-generation interval.

FIG. 4 is a signal waveform diagram comparing the operations before and after sensing a touch interrupt signal in the idle mode according to an embodiment of the present disclosure.

Referring to FIG. 4, "Vsync In" refers to a vertical synchronization signal generated by a vertical synchronization signal generator (not shown), and "Tsync In" is a touch synchronization signal generated by a touch synchronization signal generator (not shown). "PWM SR" is a PWM switching control signal generated by a PWM generator (not shown). "Touch Interrupt" is a touch interrupt signal generated by a touch interrupt signal generator (not shown) and is used when a touch event is transmitted to a host system. "Rising edge" Interrupt is a rising edge interrupt signal generated by the touch controller, and "Falling edge Interrupt" is a falling edge interrupt signal generated by the touch controller.

The vertical synchronization signal generator and the touch synchronization signal generator may be configured within the timing controller, and the PWM generator and the touch interrupt signal generator may be configured within the touch controller. The vertical synchronization signal generator, the PWM generator, and the interrupt signal generator may receive the touch synchronization signal from the touch synchronization signal generator to generate the vertical synchronization signal, the PWM control signal, and the interrupt signal, respectively.

Since the touch synchronization signal has a frequency of 24Hz, the PWM SR having a frequency of 120Hz is generated five times during one cycle of the touch synchronization signal. The interval from the time point when the PWM SR is output after the falling edge interrupt signal of the touch synchronization signal occurs to the time point when the rising edge interrupt signal of the touch synchronization signal appears may be referred to as a self-generation interval.

Conventionally, because the output signals of the multiplexers are received according to the touch synchronization signal and the vertical synchronization signal, the performance of the touch report rate and latency was proportional to the display refresh rate of the screen. In addition, the display refresh rate of the screen is arbitrarily changed to save battery consumption, and touch performance deteriorated because it was proportional to the changed display refresh rate of the screen.

However, in an embodiment of the present disclosure, a touch synchronization signal is generated when a vertical synchronization signal is generated, and at a time point when a falling edge of the touch synchronization signal occurs, a PWM switching control signal and a touch interrupt signal become high for an extremely short time. The PWM switching control signal is repeatedly generated at constant intervals (for example, 8.3 ms) until the touch synchronization signal is generated again. In this case, while the first PWM switching control signal is generated in an interval that is not the self-generation interval in the idle mode, the second and subsequent PWM switching control signals are generated in the self-generation interval of the idle mode. That is, both the first PWM switching control signal and the second and subsequent PWM switching control signals may be generated at uniform intervals in the idle mode.

In an embodiment of the present disclosure, since it is possible to control the pulse signal to be repeatedly output at desired time intervals during a touch sensing period, there is no problem with touch report performance even when the finger press/release time is shortened while touching the screen. Furthermore, it is possible not only to set the touch driving device to a desired performance regardless of the display refresh rate but also to operate it at the highest performance.

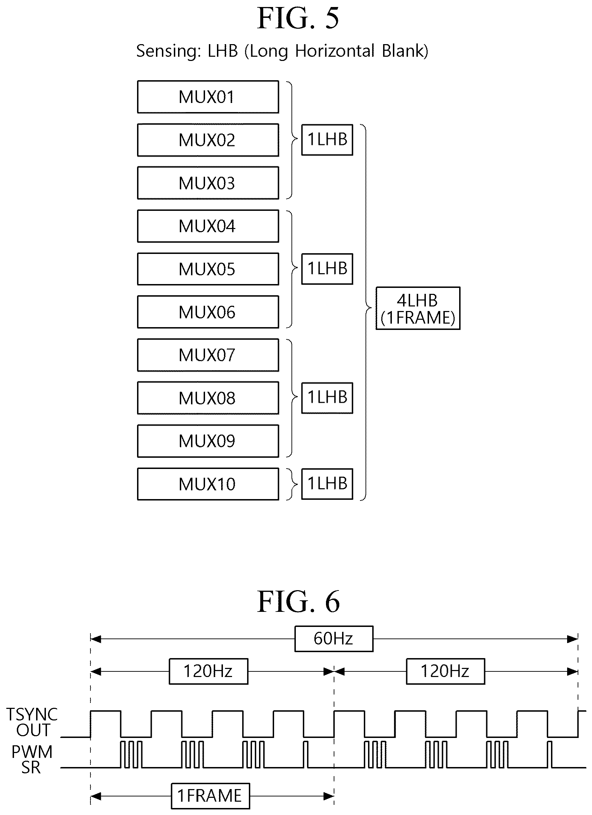

FIG. 5 is a schematic view illustrating a frame structure in the active mode according to an embodiment of the present disclosure, and FIG. 6 is a signal waveform diagram illustrating the operation in the active mode according to an embodiment of the present disclosure.

Referring to FIGS. 5 and 6, in the active mode, ten multiplexers MUX 01, MUX 02, MUX 03, MUX 04, MUX 05, MUX 06, MUX 07, MUX 08, MUX 09, and MUX 10 are turned on during one frame interval. The MUX 01, MUX 02, and MUX 03 are turned on during the 1LHB interval, the MUX 04, MUX 05, and MUX 06 are turned on during another 1LHB interval, the MUX 07, MUX 08, and MUX 09 are turned on during yet another 1LHB interval, and the MUX 10 is turned on during the remaining 1LHB interval. As such, one frame interval may include four LHB intervals.

Within one frame interval, when the touch synchronization signal output TSYNC OUT is low, a PWM switching control signal is generated at a different cycle than that of the touch synchronization signal output for each LHB interval. At a timing of sensing the one long horizontal blank (1LHB) interval, an output signal of the touch synchronization signal is generated.

Referring to FIG. 6, it may be seen that the touch synchronization signal output is generated for four cycles within one frame interval having a frequency of 120 Hz, and after one frame interval, the same touch synchronization signal output is generated again within the next frame interval.

Within one frame interval, when the outputs of the first to fourth touch synchronization signals are low, a pulse width modulation (PWM) switching control signal PWM SR is generated, where 3, 3, 3, and 1 pulses are respectively produced. A touch report is generated by such a switching control signal.

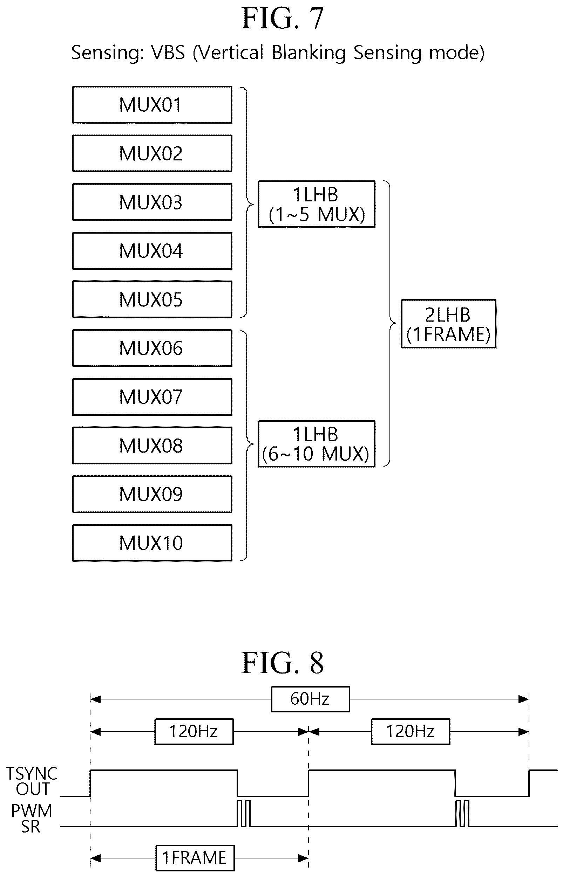

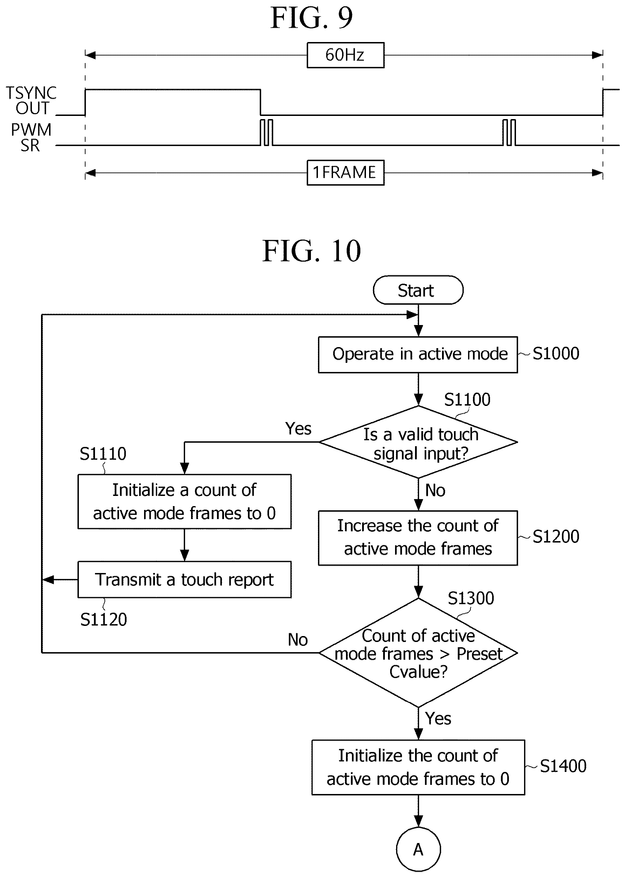

FIG. 7 is a schematic view illustrating a frame structure in the idle mode according to an embodiment of the present disclosure, FIG. 8 is a first signal waveform diagram illustrating the operation in the idle mode according to an embodiment of the present disclosure, and FIG. 9 is a second signal waveform diagram illustrating the operation in the idle mode according to an embodiment of the present disclosure.

Referring to FIGS. 7 to 9, in the idle mode, the ten multiplexers MUX 01, MUX 02, MUX 03, MUX 04, MUX 05, MUX 06, MUX 07, MUX 08, MUX 09, and MUX 10 are turned on during one frame interval. The MUX 01, MUX 02, MUX 03, MUX 04, and MUX 05 are turned on during the 1LHB interval, and the MUX 06, MUX 07, MUX 08, MUX 09, and MUX 10 are turned on during another 1LHB interval. As such, one frame interval may include two LHB intervals.

Within one frame interval, when the touch synchronization signal output TSYNC OUT is low, the PWM switching control signal may be generated as many as the number of LHB intervals.

Referring to FIG. 8, it may be seen that within one frame interval having a frequency of 120 Hz, the touch synchronization signal output TSYNC OUT is generated during one cycle, and after one frame interval, the same touch synchronization signal output is generated again within the next frame interval.

Within one frame interval, when the touch synchronization signal output is low, the pulse width modulation (PWM) switching control signal PWM SR is generated, and in this case, two pulses are produced.

In FIG. 8, two pulses generated within one frame interval generate before the self-generation interval. This case is an example in which the touch controller is configured not to operate in the self-generation interval because a rising edge occurs before elapse of the first set time after a falling edge of the touch synchronization signal occurs (refer to FIG. 4).

Referring to FIG. 9, it may be seen that within one frame interval having a frequency of 60Hz, the touch synchronization signal output is generated during one cycle.

Within one frame interval, when the touch synchronization signal output is low, the pulse width modulation (PWM) switching control signal PWM SR is generated, and in this case, two pulses are produced twice.

In FIG. 9, a set of two pulses are generated twice within one frame interval. The two pulses generated for the second time are generated in the self-generation interval. This case is an example in which the touch controller may operate in the self-generation interval because the first set time elapses after the falling edge of the touch synchronization signal occurs and before the rising edge of the touch synchronization signal occurs (refer to FIG. 4).

In this way, by allowing the touch controller to operate in the self-generation interval, it is possible to control the pulse signal to be repeatedly output at desired time intervals. Accordingly, the performance of the touch report rate and touch latency may be improved even when the touch time is shortened.

A touch driving method according to an embodiment of the present disclosure may include: receiving, by a touch controller 43, output signals of a plurality of multiplexers 41a included in a sensing circuit unit 41 in an active mode to calculate touch sensing coordinates; detecting, by the touch controller 43, a valid touch signal in an idle mode; outputting, by the touch controller 43, a first control signal to the multiplexers in the idle mode to receive the output signals of the multiplexers 41a one time within a first set time; and outputting, by the touch controller 43, a second control signal to the multiplexers after the first set time to repeatedly receive the output signals of the multiplexers 41a at second set time intervals in the self-generation interval of the idle mode. The first control signal and the second control signal are generated in the form of a first pulse signal and a second pulse signal, respectively. If a valid touch signal is detected, the touch controller may operate in the active mode.

Hereinafter, the touch driving method according to an embodiment of the present disclosure will be described in detail with reference to FIGS. 10 to 12.

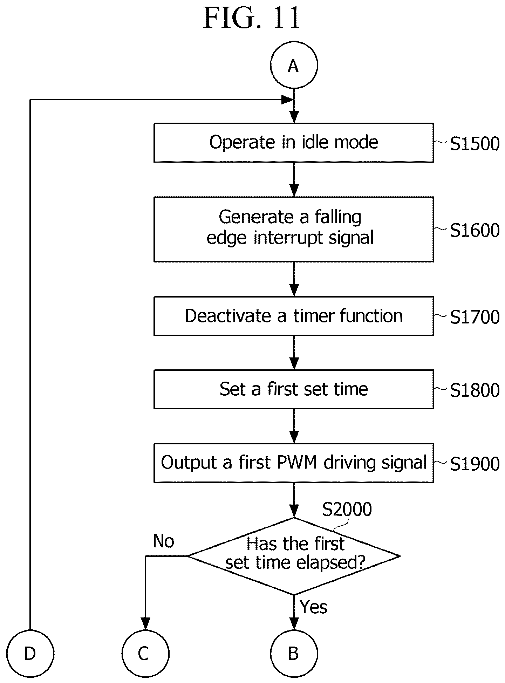

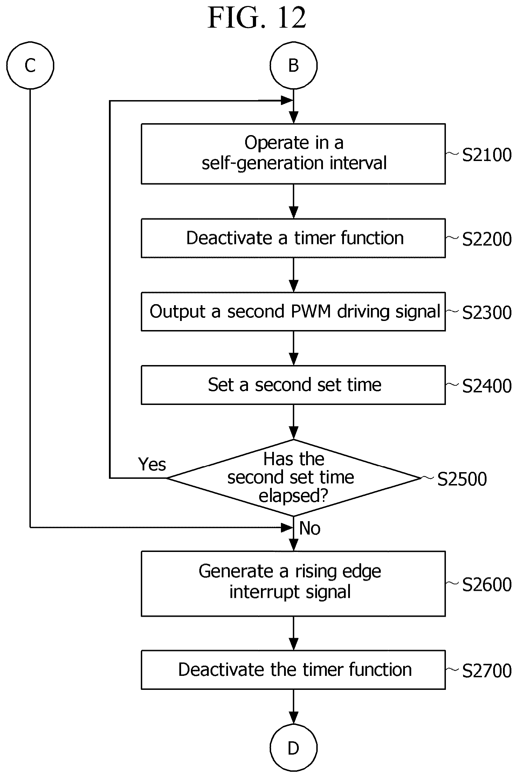

FIG. 10 is a flowchart of the active mode in the touch driving method according to an embodiment of the present disclosure, FIG. 11 is a flowchart of the interval prior to the self-generation interval of the idle mode in the touch driving method according to an embodiment of the present disclosure, and FIG. 12 is a flowchart of the self-generation interval of the idle mode according to an embodiment of the present disclosure.

Referring to FIGS. 10 to 12, the touch driving method may include steps S1000 to S2700. Here, although FIGS. 10 to 12 represent a single flow, the drawings are separated for convenience, and A, B, and C are connection points between the drawings.

First, the touch controller 43 operates in an active mode (S1000) and determines whether there is a valid touch input on the display panel 10 (S1100).

In S1100, if there is no valid touch input, the touch controller 43 increases a count of active mode frames (S1200). However, if there is a valid touch input in S1100, the touch controller 43 initializes the count of active mode frames to 0 (S1110), then calculates touch sensing coordinates and transmits a touch report to the timing controller 60 (S1120). After S1120, S1000 is performed.

After S1200, the touch controller 43 determines whether the count of the active mode frames is greater than a preset value (S1300).

In S1300, if the count of the active mode frames is greater than the preset value, the touch controller 43 initializes the count of the active mode frames to 0 (S1400). However, in S1300, if the count of the active mode frames is not greater than the preset value, S1000 is performed.

After S1400, the touch controller 43 operates in the idle mode (S1500), receives a touch synchronization signal, and generates a falling edge interrupt signal (S1600).

After S1600, the touch controller 43 deactivates the timer function (S1700), sets a first set time (S1800), and controls the sensing circuit unit 41 to output a first pulse width modulation driving signal (S1900). The first set time refers to the duration from the occurrence of the falling edge of the touch synchronization signal until the touch controller 43 operates in a self-generation interval. The self-generation interval refers to an interval in which a second pulse signal, to be described later, repeatedly appears.

After S1900, the touch controller 43 determines whether the first set time has elapsed (S2000).

In S2000, if the first set time has elapsed, the touch controller 43 operates in a self-generation interval (S2100), deactivates a timer function (S2200), and controls the sensing circuit unit 41 to output a second pulse width modulation driving signal (S2300). However, in S2000, if a rising edge of the touch synchronization signal occurs before elapse of the first set time in the idle mode, the touch controller 43 is configured not to operate in the self-generation interval. Specifically, before the first set time elapses, the touch controller 43 receives the touch synchronization signal from the timing controller 60 and generates a rising edge interrupt signal (S2600). The process of S2600 means not operating in the self-generation interval.

After S2300, the touch controller 43 sets a second set time (S2400). The second set time is the duration from when the second pulse signal is generated until the second pulse signal is generated again. The second pulse signal repeatedly appears in the self-generation interval.

After S2400, the touch controller 43 determines whether the second set time has elapsed (S2500).

In S2500, if the second set time has not elapsed, the touch controller 43 receives the touch synchronization signal from the timing controller 60 and generates a rising edge interrupt signal (S2600). The process of S2600 means exiting the self-generation interval instead of continuing to operate therein. However, in S2500, if the second set time has elapsed, S2100 is performed.

After S2600, the touch controller 43 deactivates the timer function (S2700).

After S2700, the touch controller 43 operates in the idle mode (S1500), receives a touch synchronization signal from the timing controller 60, and generates a falling edge interrupt signal (S1600).

Meanwhile, if a valid touch signal is detected when not in the active mode, the touch controller 43 deactivates the timer function and operates in the active mode (S1000).

Although the embodiments of the present disclosure have been described in more detail with reference to the accompanying drawings, the present disclosure is not necessarily limited to such embodiments, and may be variously modified within the scope thereof without departing from the technical spirit of the present disclosure. Therefore, the embodiments disclosed in the present disclosure are provided for illustrative purposes only and are not intended to limit the technical concept of the present disclosure, and the scope of the technical concept of the present disclosure is not limited thereto. Therefore, it should be understood that the embodiments described above are illustrative in all aspects and do not limit the present disclosure. The scope of protection of the present disclosure should be construed on the basis of the following claims, and all technical concepts within the equivalent scope thereof should be construed as falling within the scope of the present disclosure.

### [List of Reference Numbers]

| | | | |
|---|---|---|---|
| 10: | Display panel | 20: | Data driving device |
| 30: | Gate driving device | 40: | Touch driving device |
| 41: | Sensing circuit | 41a: | Multiplexer |
| 41b: | Switch array | 43: | Touch controller |
| 50: | Host system | 60: | Timing controller |

## Claims

1. A touch driving device comprising:
a sensing circuit including a plurality of multiplexers connected to a plurality of sensing lines; and
a touch controller configured to operate in an active mode and an idle mode, calculate touch sensing coordinates by receiving output signals of the multiplexers in the active mode, and detect a valid touch signal in the idle mode,
wherein the touch controller is configured to output a first control signal for receiving the output signals of the multiplexers one time within a first set time in the idle mode to the multiplexers, and output a second control signal for repeatedly receiving output signals of the multiplexers at a second set time interval in a self-generation interval of the idle mode after the first set time to the multiplexers.

2. The touch driving device of claim 1, wherein the first control signal and the second control signal are generated in the form of a first pulse signal and a second pulse signal, respectively, and the touch controller is configured to operate in the active mode when the valid touch signal is detected.

3. The touch driving device of claim 1 or 2, wherein the touch controller is configured to increase a count of active mode frames when there is no valid touch input on a display panel in the active mode, and operate in the idle mode when the count of the active mode frames is greater than a preset value.

4. The touch driving device of any one of the preceding claims, wherein the touch controller is configured to, in the active mode, calculate the touch sensing coordinates and transmit a touch report to a timing controller, and initialize the count of the active mode frames if there is a valid touch input on the display panel.

5. The touch driving device of any one of the preceding claims, wherein the touch controller is configured not to operate in the self-generation interval when a rising edge of a touch synchronization signal occurs before the elapse of the first set time in the idle mode.

6. The touch driving device of claim 2, wherein the first set time is a duration from when a falling edge of the touch synchronization signal occurs until the touch controller operates in the self-generation interval, and the self-generation interval is an interval in which the second pulse signal repeatedly appears.

7. The touch driving device of claim 2, wherein the touch controller is configured to repeat setting the second set time after controlling the sensing circuit to output the second pulse signal upon elapse of the second set time, and the second set time is a duration from when the second pulse signal is generated until the second pulse signal is generated again.

8. The touch driving device of any one of the preceding claims, wherein the first set time and the second set time have the same interval.

9. The touch driving device of any one of the preceding claims, wherein the second set time is repeated in a touch sensing period of the idle mode.

10. A touch driving method comprising:
calculating, by a touch controller, touch sensing coordinates by receiving output signals of a plurality of multiplexers included in a sensing circuit in an active mode;
detecting, by the touch controller, a valid touch signal in an idle mode;
outputting, by the touch controller, a first control signal for receiving the output signals of the multiplexers one time within a first set time in the idle mode to the multiplexers; and
outputting, by the touch controller, a second control signal for repeatedly receiving the output signals of the multiplexers at a second set time interval in a self-generation interval of the idle mode after the first set time to the multiplexers.

11. The touch driving method of claim 10, wherein the first control signal and the second control signal are generated in the form of a first pulse signal and a second pulse signal, respectively, and the touch controller operates in the active mode when the valid touch signal is detected.

12. The touch driving method of claim 10 or 11, wherein the touch controller increases a count of active mode frames when there is no valid touch input on a display panel in the active mode, and operates in the idle mode when the count of the active mode frames is greater than a preset value.

13. The touch driving method of any one of claims 10 to 12, wherein the touch controller calculates the touch sensing coordinates to transmit a touch report to a timing controller in the active mode, and initializes the count of the active mode frames if there is a valid touch input on the display panel.

14. The touch driving method of claim 11, wherein the touch controller does not operate in the self-generation interval when a rising edge of a touch synchronization signal occurs before elapse of the first set time in the idle mode, and the first set time is a duration from when a falling edge of the touch synchronization signal occurs until the touch controller operates in the self-generation interval, and the self-generation interval is an interval in which the second pulse signal repeatedly appears.

15. The touch driving method of claim 11, wherein the touch controller repeats setting the second set time after controlling the sensing circuit to output the second pulse signal upon elapse of the second set time, and the second set time is a duration from when the second pulse signal is generated until the second pulse signal is generated again.
